# FASCICULE DE BREVET EUROPEEN

(11) **EP 0 394 423 B1**
(45) Date de publication et mention de la délivrance du brevet: **07.07.1993**
(21) Numéro de dépôt: 89912254.3
(22) Date de dépôt: 16.10.1989
(51) Int. Cl.: H04Q 11/04, H04M 11/06

(54) **DISPOSITIF DE COMMUNICATION ENTRE UN RESEAU NUMERIQUE ET UN EQUIPEMENT TELEMATIQUE**
VERMITTLUNGSANORDNUNG ZWISCHEN EINEM DIGITALEN NETZ UND EINEM TELEMATIK-TERMINAL
COMMUNICATION DEVICE BETWEEN A DIGITAL NETWORK AND A TELEMATIC EQUIPMENT

(30) Priorité: 17.10.1988 FR 8813643
(43) Date de publication de la demande: 31.10.1990
(73) Titulaire: OMNITEL, 92140 Clamart (FR)
(72) Inventeur: LEDU, Jacques, F-92140 Clamart (FR)
(74) Mandataire: Arnaud, Jean Pierre Alfred
(86) Numéro de dépôt international: FR8900534
(87) Numéro de publication internationale: WO9004907

(56) Documents cités:
- US-A- 4 799 144
- Proceedings of the International Conference on ISDN, June 1988, (London, GB); F. Caussarieu et al.: "Interface board for PC's providing SO interface with voice and data communications capabilities", pages 251-262
- Electronic Design, vol. 35, no. 29, 10 December 1987, (Hasbrouck Heights, NJ, US); D. Gulick et al.: "Interface the ISDN to your PC with a voice/date board", pages 85-88
- Proceedings International Symposium on Subscriber Loops and Services, 11-16 September 1988, paper 4.3, IEEE (Boston, US); K. Kammerer: "User benefits of ISDN in Germany", pages 70-74
- Electrical Communication, vol. 61, no. 1, 1987 (Harlow, Essex, GB); D. Adolphs et al.: "Subsets, terminals, and terminal adapters for the public ISDN", pages 72-80
- Wescon Conference Record, vol. 31, 1987, Paper 20/75 (Los Angeles, CA, US); C. Stacey: "Build your own ISDN terminal/terminal adapter", pages 1-7
- Commutation & Transmission, vol. 9, no. 3, 28 September 1987 (Paris, FR); J.-L. Lavoisard et al.: "Les installations terminales d'abonnés", pages 35-50

## Description

La présente invention concerne des dispositifs utilisés pour la communication entre des équipements télématiques d'une part et d'autres équipements télématiques ou des services centralisés d'autre part.

Dans le présent mémoire, l'expression "équipement télématique" désigne les équipements assurant le courrier électronique entre terminaux (télex, télécopie, télétex, transfert de fichiers), la messagerie électronique, l'accés aux banques de données et l'accés à des centres informatiques. En outre, le terme "composant" désigne un ou plusieurs circuits électroniques montés dans un seul boîtier.

Les administrations de différents pays commencent à mettre en place un nouveau type de réseau destiné à remplacer progressivement le réseau commuté actuel. Il s'agit d'un réseau numérique appelé "réseau numérique à intégration de services". Un tel réseau est destiné à permettre une réalisation plus rationnelle, plus efficace et moins coûteuse des applications actuelles, avec une meilleure qualité de transmission.

Compte tenu des équipements télématiques existants prévus pour le réseau commuté actuel et de la mise en place progressive du réseau numérique à intégration de services, il faut que les utilisateurs puissent disposer des services de ce réseau sans devoir s'équiper à nouveau complètement. Il est donc nécessaire que des dispositifs permettent une utilisation des équipements télématiques actuels sur ce nouveau réseau.

Il existe actuellement de tels dispositifs connus sous le nom d'"adaptateurs". Ces adaptateurs sont destinés à créer, du côté de l'équipement télématique, des conditions qui simulent celles du réseau commuté analogique qui n'a pas fait l'objet d'une standardisation internationale complète. Ces adaptateurs comportent toujours à cet effet, du côté du réseau, des circuits spécifiques et, du côté de l'équipement télématique, des circuits de gestion de ligne d'abonné qui sont peu intégrés et de ce fait relativement encombrants et coûteux.

Lorsqu'un équipement télématique est en communication par l'intermédiaire du réseau commuté, il est relié à ce dernier par un modem (modulateur-démodulateur). Un tel modem comporte toujours deux groupes de circuits, un premier groupe (qui ne comprend souvent qu'un seul composant) destiné à remplir la fonction modem proprement dite, et un second groupe formé de circuits de gestion de ligne d'abonné, ce groupe comportant plusieurs composants relativement encombrants et coûteux.

Les circuits de gestion de ligne d'abonné des adaptateurs et des modems ont une consommation d'énergie telle qu'ils doivent être reliés à une alimentation prévue à cet effet (soit spécifique, soit commune avec l'équipement télématique concerné).

L'article Electrical Communication, vol. 61, n° 1, 1987, pages 72-80, Harlow, Essex, GB, de D. Adolphs et al. : "Subsets, terminals, and terminal adapters for the public ISDN", l'article Wescon Conference Record, vol. 31, 1987, communication 20/75 pages 1-7, Los Angeles, Californie, US, de C. Stacey : "Build your own ISDN terminal/terminal adapter", la demande de brevet européen n° 238 255, l'article Electronique Industrielle, n° 8, décembre 1986, pages 32-40, Paris, FR, de H. Geyer : "Le réseau numérique à intégration de services", l'article IEEE International Conference on Communications'86, Toronto, 22- 25 juin 1986, vol. 3, pages 47.3.1-47.3.5, 1504-1508, IEEE, New York, US, de J. Chatterley et al. : "The ISDN PC : a flexible voice date workstation" et l'article Commutation & Transmission, vol. 9, n° 3, 28 septembre 1987, pages 35-50, Paris, de J.-L. Lavoisard et al. : "Les installations terminales d'abonnés" indiquent tous la possibilité de la réalisation d'une carte destinée à un ordinateur et constituant un adapteur disposé entre un équipement télématique et un réseau numérique. Lorsqu'ils ne sont pas trop succincts, ces documents indiquent la présence d'une alimentation séparée et de circuits de gestion de ligne d'abonné.

L'invention repose sur la découverte du fait qu'il est possible de supprimer les circuits de gestion de ligne d'abonné de l'adaptateur et du modem, et de supprimer de cette manière une grande partie des composants de l'ensemble habituel adaptateur+modem.

Une telle suppression non seulement réduit considérablement le coût du dispositif, mais encore accroît sa fiabilité par suppression des fonctions de gestion de ligne d'abonné, et, dans certains cas, permet une alimentation électrique directe par le réseau.

Plus précisément, l'invention concerne un dispositif de communication entre le réseau numérique à intégration de services et un équipement télématique, du type qui comporte une interface S destinée à être connectée au réseau, et un circuit de codage-filtrage-décodage connecté à l'interface S ; selon l'invention, ce dispositif comprend un circuit modulateur-démodulateur directement connecté au circuit de codage-filtrage-décodage, et destiné à être connecté à l'équipement télématique. Le terme "directement" indique que le dispositif est démuni de circuit actif de gestion de ligne d'abonné.

De préférence, le circuit modulateur-démodulateur est un composant unique. Dans une variante, le circuit modulateur-démodulateur comporte plusieurs composants, destinés chacun à supporter des échanges suivant au moins un protocole particulier.

Il est aussi avantageux que le circuit de codage-filtrage-décodage soit formé par un seul composant.

Dans un mode de réalisation avantageux, le dispositif comporte en outre au moins un circuit destiné à permettre des échanges suivant des protocoles propres au réseau numérique et connecté à un emplacement disposé entre l'interface S et le circuit de codage-filtrage-décodage.

Le dispositif comporte de préférence un circuit de pilotage et de gestion destiné à constituer une interface avec un microordinateur.

Il est trés avantageux que le dispositif soit disposé en totalité sur une carte de circuit imprimé. Dans ce cas, la carte comporte de préférence un connecteur latéral destiné à être enfiché dans un connecteur allongé d'une carte-mère de microordinateur et comprenant les connexions du circuit de pilotage et de gestion, et des connecteurs séparés pour la connexion de l'interface S et pour celle du modulateur-démodulateur.

D'autres caractéristiques et avantages de l'invention ressortiront mieux de la description qui va suivre, faite en référence aux dessins annexés sur lesquels :
- la figure 1 est un diagramme synoptique représentant les éléments essentiels d'un dispositif selon l'invention ; et
- la figure 2 est un diagramme synoptique plus détaillé du dispositif de la figure 1, comprenant des composants supplémentaires lui donnant des fonctions supplémentaires.

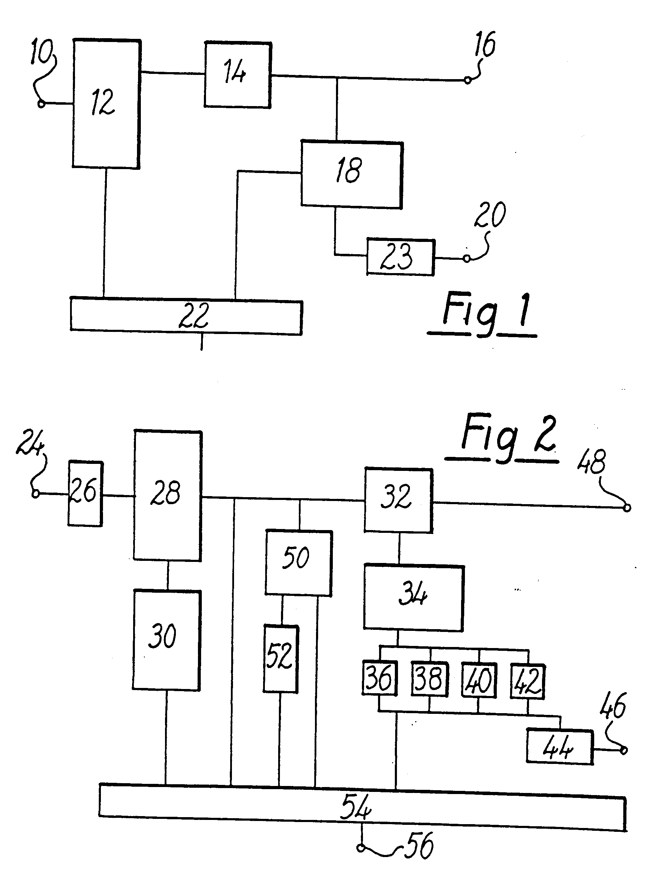

La figure 1 est un diagramme synoptique très simplifié destiné à indiquer le principe de mise en oeuvre de l'invention. Sur cette figure, la borne 10 représente la connexion au réseau numérique à intégration de services RNIS, comportant deux canaux de données B1 et B2 et un canal de commande D. La référence 12 désigne la gestion physique de l'interface normalisée appelée "interface S" qui est en général sous forme d'un composant unique. L'interface S est reliée à un circuit de codage-filtrage-décodage 14, en général sous forme d'un composant unique appelé "cofidec" par abréviation. Celui-ci peut être aussi intégré dans l'interface S. La borne 16 indique simplement la possibilité de la connexion directe d'un équipement, par exemple de téléphonie, capable de travailler avec une interface RJ11.

La référence 18 désigne le modem (modulateur-démodulateur) lui aussi formé de préférence par un composant unique. Le modem est relié à l'équipement télématique à connecter par un équipement d'adaptation V24/V28 23 et par la borne 20.

La référence 22 désigne un circuit de pilotage et de gestion de l'ensemble du dispositif, comme décrit plus en détail dans la suite en référence à la figure 2.

De préférence, l'ensemble du dispositif est monté sur une carte unique de circuit imprimé destinée à être montée dans un microordinateur. Cependant, d'autres utilisations sont possibles, par exemple sous forme d'un boîtier séparé.

Dans la technique antérieure, l'interface S et le cofidec sont associés à des circuits de gestion de ligne d'abonné dans un adaptateur, et le composant modem est associé à d'autres circuits de gestion de ligne d'abonné dans ce qu'on appelle habituellement un "modem". Au contraire, selon l'invention, on note l'absence de tout circuit de gestion de ligne entre le cofidec et le composant modem.

La figure 2 représente un mode de réalisation comportant des éléments ajoutés destinés à donner des fonctions supplémentaires.

Entre la connexion 24 au réseau RNIS et l'interface S 28, un composant 26 assure l'isolement habituellement nécessaire dans tout couplage entre un réseau numérique et un équipement. Le canal D est géré par un circuit 30, selon les normes fixées pour le réseau RNIS. La référence 32 désigne le cofidec et la référence 34 le composant modem. Ce dernier permet directement l'utilisation de certains protocoles, par exemple V21, V22, V23bis, V27ter et V29. Les références 36, 38, 40, 42 et 44 désignent des circuits supportant d'autres protocoles, par exemple V42 MNP (36), V42 LAPM (38), T30 (40), AT-Hayes (42) et l'adaptation V24/V28 (44). La borne 46 correspond à la borne 20 (V24/V28) et la borne 48 à la borne 16 de la figure 1.

La référence 50 désigne un circuit destiné à permettre des échanges en mode paquet dans le canal B. La référence 52 désigne un circuit permettant des échanges en mode V120, propre au RNIS.

Les divers protocoles indiqués précédemment ne sont que des exemples, et un dispositif particulier peut être conçu pour supporter un seul de ces modes, ou au contraire un plus grand nombre.

La référence 54 désigne un circuit, analogue au circuit 22 de la figure 1, destiné à assurer le pilotage de l'ensemble du dispositif et la gestion des circuits du dispositif, et à constituer une interface entre le dispositif et le bus d'un microordinateur repéré schématiquement par la référence 56). En effet, un certain nombre de fonctions de gestion et de pilotage sont nécessaires, notamment pour le canal D. Ce circuit comporte de préférence un microprocesseur. Il peut avantageusement réaliser les fonctions des composants 30, 50, 52, 36, 38, 40, 42.

Dans un exemple de circuit, l'interface S est du type ISAC-S de Siemens, le cofidec est du type ARCOFI de Siemens, le modem V22/V22bis est du type AM79CV14 de AMD, et le circuit de pilotage et de gestion est configuré autour d'un microprocesseur I80CI88 de Intel.

Selon une caractéristique trés avantageuse de l'invention et grâce à l'élimination des circuits de gestion de ligne d'abonné, le dispositif ne nécessite pas d'alimentation spécifique et peut être directement alimenté par le réseau (notamment dans le cas d'une réalisation en circuits CMOS et sous forme de boîtier externe ).

Ainsi, l'invention permet la réalisation de dispositifs de coût réduit, ayant une excellente fiabilité et permettant à l'utilisateur de tirer pleinement avantage des possibilités du réseau numérique à intégration de services.

L'évolution technologique actuelle des composants laisse prévoir que plusieurs des composants précités seront intégrés en un seul composant. Cela ne changera cependant pas la nature de l'invention.

## Revendications

1. Dispositif de communication entre le réseau numérique à intégration de services et un équipement télématique, du type qui comporte une interface S (12) destinée à être connectée au réseau, et un circuit de codage-filtrage-décodage (14) connecté à l'interface S,
caractérisé en ce qu'il comprend un circuit modulateur-démodulateur (18) directement connecté au circuit de codage-filtrage-décodage, et destiné à être connecté à l'équipement télématique,
le dispositif étant démuni de circuit actif de gestion de ligne d'abonné.

2. Dispositif selon la revendication 1, caractérisé en ce que le circuit modulateur-démodulateur (18) est un composant unique.

3. Dispositif selon la revendication 1, caractérisé en ce que le circuit modulateur-démodulateur (34-44) comporte plusieurs composants, destinés chacun à supporter des échanges suivant au moins un protocole particulier.

4. Dispositif selon l'une quelconque des revendications 1 à 3, caractérisé en ce que le circuit de codage-filtrage-décodage (12) est formé par un seul composant.

5. Dispositif selon l'une quelconque des revendications précédentes, caractérisé en ce qu'il comporte en outre au moins un circuit (50, 52) destiné à permettre des échanges suivant des protocoles propres au réseau numérique et connecté à un emplacement disposé entre l'interface S (28) et le circuit de codage-filtrage-décodage (32).

6. Dispositif selon l'une quelconque des revendications précédentes, caractérisé en ce qu'il comporte un circuit de pilotage et de gestion (54) destiné à constituer une interface avec un microordinateur.

7. Dispositif selon l'une quelconque des revendications précédentes, caractérisé en ce qu'il est disposé en totalité sur une carte de circuit imprimé.

8. Dispositif selon la revendication 7, caractérisé en ce que la carte comporte un connecteur latéral destiné à être enfiché dans un connecteur allongé d'une carte-mère de microordinateur et comprenant les connexions du circuit de pilotage et de gestion (54).

9. Dispositif selon la revendication 8, caractérisé en ce que la carte comporte en outre des connecteurs séparés pour la connexion de l'interface S (26)et pour celle du modulateur-démodulateur (34).

## Claims

1. Device for providing communications between an integrated services digital network and a telematic equipment, which includes a S-interface (12) to be connected to said network, and a coding-filtering-decoding circuit (14) connected to said S-interface,
characterized in that it includes a modulator-demodulator circuit (18) directly connected to said coding-filtering-decoding circuit and to be connected to said telematic equipment,
said device including no active subscriber line handling circuit.

2. Device according to claim 1, characterized in that said modulator-demodulator circuit (18) is a single component.

3. Device according to claim 1, characterized in that said modulator-demodulator circuit (34-44) include several components, each for supporting transfers according to at least a peculiar protocol.

4. Device according to any one of claims 1 to 3, characterized in that said coding-filtering-decoding circuit (12) is formed by a single component.

5. Device according to any one of preceding claims, characterized in that it further includes at least a circuit (50, 52) for allowing transfers according to protocols peculiar to said digital network and connected at a position located between said S-interface (28) and said coding-filtering-decoding circuit (32).

6. Device according to any one of preceding claims, characterized in that it includes a driving and controlling circuit (54) for constituting an interface with a microcomputer.

7. Device according to any one of preceding claims, characterized in that it is completely located on a printed circuit board.

8. Device according to claim 7, characterized in that said board includes an edge connector to be fitted in an elongated connector of a mother board of a microcomputer and including connections of driving and controlling circuit (54).

9. Device according to claim 8, characterized in that said board further includes separated connectors for connecting S-interface (26) and for connecting modulator-demodulator (34).

## Patentansprüche

1. Vermittlungsanordnung zwischen dem digitalen Netz zur Integration von Dienstleistungen und einer Telematik-Einrichtung, enthaltend eine mit dem Netz verbundene Schnittstelle S (12) und eine mit der Schnittstelle S verbundene Schaltung (14) zum Codieren, Filtern und Decodieren,
dadurch gekennzeichnet,
daß die Anordnung eine Modulator-Demodulator-Schaltung (18) enthält, die direkt mit der Schaltung zum Codieren, Filtern und Decodieren verbunden ist und zur Verbindung mit der Telematik-Einrichtung bestimmt ist,
daß die Anordnung von einer aktiven Steuerschaltung einer Teilnehmerleitung unabhängig ist.

2. Anordnung nach Anspruch 1, dadurch gekennzeichnet, daß die Modulator-Demodulator-Schaltung (18) ein einziges Bauteil ist.

3. Anordnung nach Anspruch 1, dadurch gekennzeichnet, daß die Modulator-Demodulator-Schaltung (34-44) mehrere Bauteile enthält, die nachfolgende Auswechslungen von wenigstens einem besonderen Protokoll unterstützen.

4. Anordnung nach einem der Ansprüche 1 bis 3, dadurch gekennzeichnet, daß die Schaltung (12) zum Codieren, Filtern und Decodieren durch ein einziges Bauelement gebildet wird.

5. Anordnung nach einem der vorhergehenden Ansprüche, dadurch gekennzeichnet, daß sie u.a. wenigstens eine Schaltung (50, 52) enthält, die nachfolgende Auswechslungen der sauberen Protokolle im digitalen Netz erlaubt und an einer Stelle zwischen der Schnittstelle S (28) und der Schaltung (32) zum Codieren, Filtern und Decodieren angeschlossen ist.

6. Anordnung nach einem der vorhergehenden Ansprüche, dadurch gekennzeichnet, daß sie eine Pilot- und Steuerschaltung (54) enthält, die eine Schnittstelle mit einem Microcomputer bildet.

7. Anordnung nach einem der vorhergehenden Ansprüche, dadurch gekennzeichnet, daß sie als Ganzes auf einer gedruckten Schaltungskarte angeordnet ist.

8. Anordnung nach Anspruch 7, dadurch gekennzeichnet, daß die Karte ein seitliches Verbindungsstück enthält, um in ein verlängertes Verbindungsstück der Mutter-Leiterplatte des Microcomputers eingesteckt zu werden und Verbindungsmittel für die Pilot- und Steuerschaltung (54) enthält.

9. Anordnung nach Anspruch 8, dadurch gekennzeichnet, daß die Karte u.a. getrennt angeordnete Verbindungsstücke für die Verbindung der Schnittstelle S (26) und für die Verbindung der Modulator-Demodulator-Schaltung (34) vorsieht.
